# EUROPEAN PATENT APPLICATION

(11) **EP 2 966 747 A1**
(43) Date of publication of application: **13.01.2016**
(21) Application number: 15175858.8
(22) Date of filing: 08.07.2015
(51) Int. Cl.: H02J 3/38

(54) **A SYSTEM ARRANGED TO CONTROL THE SUPPLY OF ENERGY AND A METHOD FOR CONTROLLING THE SUPPLY OF ENERGY**

(30) Priority: 08.07.2014 GB 201412152
(71) Applicant: Co-operative Energy Limited, Leamington Spa CV34 6RQ (GB)
(72) Inventor: DUNNING, Ramsay, Leamington Spa, CV34 6RQ (GB)
(74) Representative: Gosnall, Toby

(57) **Abstract**

A system (100) arranged to control the supply of energy to a utility grid from at least two energy generators (102a, 102b, 102c, 102d), each generating energy from an energy source (103a, 103b, 103c, 103d), the system comprising: a server (108) arranged to: receive user definable input from at least one user, the input comprising an energy source parameter associated with the user, the energy source parameter defining a proportion of the total energy to be supplied to that user which is required from each of the energy generators (102a, 102b, 102c, 102d) or each of the energy sources (103a, 103b, 103c, 103d); create energy generation data according to the energy source parameter and an energy usage parameter, the energy usage parameter relating to the amount of energy used by the user; and transmit the energy generation data to each of the energy generators (102a, 102b, 102c, 102d) to control the generation of energy.

## Description

The present disclosure relates to a system and a method for controlling the supply of energy. In particular, the present disclosure relates to the generation and supply of electrical energy.

Energy such as electrical energy can be generated from a number of sources such as fossil fuels including oil, gas and coal, as well as energy sources such as nuclear, solar, geothermal, tidal, wave, hydroelectric and wind, or the like. Currently, a user of energy has little or no control over where the energy they use is generated. The user may wish to control the generation and supply of their energy such that it is produced from more environmentally friendly sources.

In accordance with a first aspect of the present disclosure, there is provided a system arranged to control the supply of energy from at least two energy generators, each generating energy from an energy source, the system comprising at least one of the following:
a server arranged to:
   a) receive user definable input from at least one user, the input generally comprising an energy source parameter associated with the user, where the energy source parameter may define a proportion of the total energy to be supplied to that user which is required from each of the energy generators and/or each of the energy sources;
   b) create energy generation data which may be according to one or other of the energy source parameter and an energy usage parameter, the energy usage parameter relating to the amount of energy used by the user; and
   c) transmit the energy generation data to each of the energy generators to control the generation of energy.

The system provided by the present disclosure allows a user to control the supply of his/her energy by inputting energy source parameters to a server. The energy source parameters define a proportion of the total energy to be supplied to that user which is required from each of the energy generators or each of the energy sources. The supply of energy is typically controlled by calculating energy generation data from the energy source parameter received from the user and an energy usage parameter defining how much energy that particular user requires. Once the energy generation data has been created, it may be transmitted to the energy generators to control how much energy is produced in a given time. Such embodiments, allow the user to be supplied energy from the source that they have selected.

Embodiments may allow the amount of energy taken from each of the energy generators to be controlled, balanced, etc. and thus provide greater certainty as to the loads, outputs, requirements for energy, etc.

In accordance with a second aspect of the present disclosure, there is provided a method of controlling the supply of energy from at least two energy generators, each generating energy from an energy source, the method comprising at least one of the following:
at a server:
   a) receiving user definable input from at least one user, the input generally comprising an energy source parameter associated with the user, where the energy source parameter may define a proportion of the total energy to be supplied to that user which is required from each of the energy sources and/or each of the energy generators;
   b) creating energy generation data which may be according to the energy source parameter and an energy usage parameter, the energy usage parameter relating to the amount of energy used by the user; and
   c) transmitting the energy generation data to each of the energy generators to control the generation of energy.

In accordance with a third aspect of the present disclosure, there is provided a machine readable medium containing instructions which when read by a computer cause that computer to perform the steps defined in the second aspect.

In accordance with a fourth aspect of the present disclosure, there is provided a method of controlling the supply of energy from at least two energy generators, each generating energy from an energy source, the method comprising at least one of the following:
at a server:
   a) receiving user definable input from at least one user, the input generally comprising an energy source parameter associated with the user, where the energy source parameter may define a proportion of the total energy to be supplied to that user which is required from each of the energy sources and/or each of the energy generators;
   b) creating energy generation data which may be according to the energy source parameter and an energy usage parameter, the energy usage parameter relating to the amount of energy used by the user; and
   c) transmitting the energy generation data to each of the energy generators to control the generation of energy, and
at at least one of the energy generators the method comprising at least:
   a) generating energy according to the received energy generation data.

The skilled person will appreciate that a feature of any one aspect of the invention may be applied, mutatis mutandis, to any other aspect of the invention.

Furthermore, the skilled person will appreciate that elements of the aspects may be provided in software. However, the skilled person will also appreciate that any software element may be provided in firmware and/or within hardware, or vice versa.

The machine readable medium referred to in any of the above aspects of the invention may be any of the following: a CDROM; a DVD ROM / RAM (including -R/-RW or +R/+RW); a hard drive; a memory (including a USB drive; an SD card; a compact flash card or the like); a transmitted signal (including an Internet download, FTP file transfer of the like); a wire; etc.

Embodiments of the invention will now be described, by way of example only, with reference to the accompanying drawings, in which:
**Figure 1** shows a schematic view of a system arranged to control the supply of energy according to a first embodiment;
**Figure 2** shows a schematic view of a system arranged to control the supply of energy according to a second embodiment;
**Figure 3** shows a method for controlling the supply of energy using the system of Figure 1; and
**Figure 4** shows a method for controlling the supply of energy using the system of Figure 2.

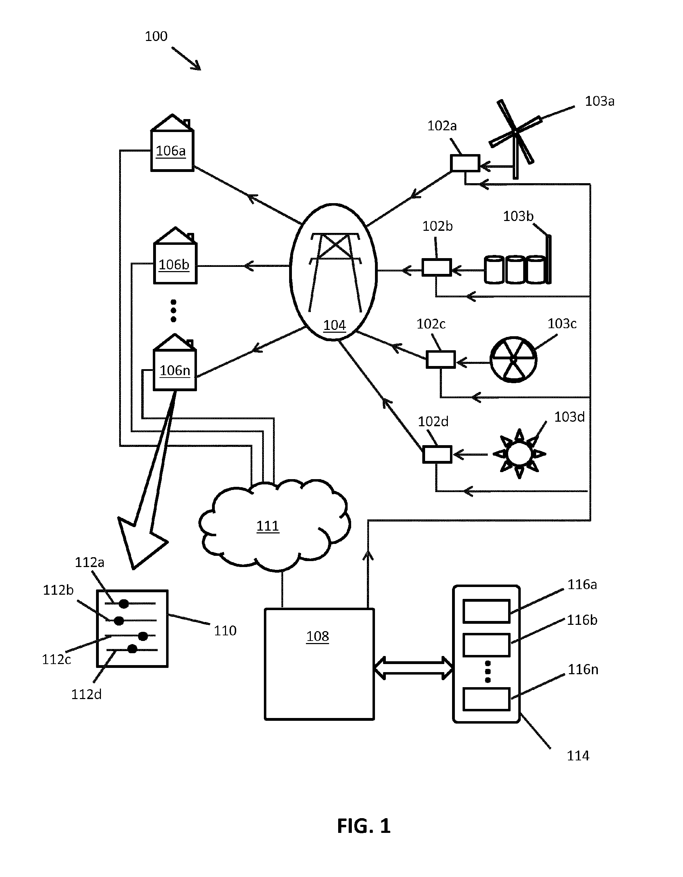

A system 100 arranged to control the supply of energy is shown in Figure 1. In the embodiment shown in Figure 1, energy is generated by four energy generators 102a, 102b, 102c, 102d. In the embodiment being described, each of the generators 102a-d, is connected to a respective energy source 103a, 103b, 103c, 103d.

The first energy generator 102a is connected to at least one wind turbine and thus uses wind power as its energy source. Although the Figure shows a single wind turbine, the skilled person will appreciate there may be a plurality of wind turbines, group of wind turbines, or the like. The second energy generator 102b uses fossil fuel as its energy source and may be a coal, gas or oil, or the like. Here the energy source 103b is shown as a power station. The third energy generator 102c uses nuclear power as its energy source 103c and may be a nuclear power station. The fourth generator 102d uses solar power as its energy source 103d and may be a solar cell, or an array of solar cells, or the like. In other embodiments, the energy generators may generate energy from other energy sources such as, tidal, wave, hydro-electric, geothermal, and the like. Here therefore, the term generator is intended to cover a device that generates power and might include a rotary machine, linear machine, a solar cell, a chemical mechanism, such as a battery, or the like.

In some embodiments there may be any number of energy sources and/or generators, with Figure 1 providing only an example in which energy is generated at four different energy generators. In some embodiments the energy generators may all be of different types i.e. they each generate energy from a different energy source. In other embodiments the energy generators may all generate energy from the same energy source or a mixture of the same and different energy sources. In other embodiments, one or more of the energy generators may be a community energy generator project arranged to generate energy for users in a specific area or community.

In the embodiment being described, each of the energy generators is arranged to produce electrical energy. However, in other embodiments it is conceivable that the type of energy supplied may be types other than electrical energy; such types may include gas, or the like. Indeed, some embodiments may control the supply of a mixture of energy types such as both gas and electricity. However, embodiments in which the energy supplied is electrical energy may have different problems to other embodiments in which the type of energy supplied is gas, or the like. Typically countries, or at least regions, have a grid (e.g. a utility grid) that distributes electrical energy through the country or region irrespective of the source. In this case, and as described below, more than one generator of electrical energy may be connected to the grid, each generating energy from the same or different sources (e.g. fossil fuel, solar, wind etc). Grids such as this are not generally provided for the supply of other types of energy, such as gas or the like.

The energy generators 102a, 102b, 102c, 102d are each connected to an energy transmission network 104, which is often referred to as a grid (ie a utility grid). The energy transmission network 104 is arranged to connect the energy generators 102a-d to users so that they may be supplied with energy which in the embodiment being described is electrical energy. Where the energy is supplied in the form of electrical energy, the transmission network 104 may be a national or regional electricity grid arranged to transmit electricity using suitable methods that would be apparent to the skilled person.

As shown in Figure 1, a number of users 106a, 106b...106n are connected to the energy transmission network 104 so that they can be supplied with energy generated at the energy generators 102a, 102b, 102c, 102d. Typically a building or property associated with a user is connected to the energy transmission network via a meter to monitor the supply of energy. Energy is then internally distributed throughout the property or building associated with each user such that it may be conveniently accessed by occupants in that building or used to power machinery, equipment or devices, or the like.

The system 100 comprises a server 108, which in the embodiment being described is arranged to generate a user interface 110. Here the user definable input is provided by a web-site to which the users can gain access by a Wide Area Network 111 and which is arranged to provide the generated user interface 110 that the server 108 has generated. In the embodiment being described, the network 111 is the World Wide Web running on top of the Internet. In other embodiments, this need not be the case.

Thus, the user interface 110 is accessible via any device that is capable of connecting to the network 111 and accessing the web-site provided by the server 108. For example, the user 106 may access the user interface 110 using a computing device such as a tablet computer, smartphone, personal computer (PC) laptop or other Internet enabled device as would be apparent to the skilled person. Each user may be provided with a user account at the server 108 which they may access to input an energy source parameter. Once the energy source parameter has been entered a confirmation of the input made may be sent to the user, for example by email, SMS message, social media message or letter.

In Figure 1, and for reasons of clarity, the user interface 110 that would appear on the computing device used by a user 110 is shown in isolation. Only one user interface is shown in Figure 1, yet it is clear that each of the users 106a, 106b,..., 106n may access the user interface by connecting to the network 111 from their own Internet enabled device.

Thus, the server 108 is arranged to receive user definable input from at least one of the users 106a...106n. The user definable input provides an energy source parameter associated with that user. The energy source parameter defines a proportion of the total energy to be supplied to that user 106 which is required from each energy source 103 and/or each energy generator. The user 106 may therefore specify what proportion of their energy is generated using a particular source 103. For example, the user may define an energy source parameter indicating that a large proportion of their energy is generated using wind power 103a as a source. The user may also define an energy source parameter indicating that a smaller proportion of their energy is generated using fossil fuel 103b as an energy source. Such embodiments therefore allow a user 106 to select the source and/or generators from which his/her energy is delivered. Such a selection may for instance allow the user to favour the generation of energy according to his/her preferences. A given user may have a preference for energy to be delivered from wind and solar power, having a lower CO₂ emission rates, rather than other sources such as those which rely on nuclear or fossil fuel sources.

The user may also define an energy source parameter indicating that they want a particular proportion of their energy to come from a particular energy generator, or group of generators, for example a community energy generation project near to them. In some embodiments, the user may define an energy source parameter indicating that they wish all of their energy to come from a single one of the energy sources, or from a single one of the energy generators. The user may, for example, define an energy parameter indicating that the proportion of the total energy to be supplied which is required from one of the energy generators (or one of the energy sources) is 100%, while the proportion of the total from each of the other energy generators (or energy sources) is 0%.

The server 108 is further arranged to create energy generation data according to the energy source parameter and an energy usage parameter. The energy usage parameter relates to the amount of energy used by each of the users 106a, 106b,..., 106n. By combining the proportion of energy required from a particular energy source 103a-d or generator 102a-d (defined by the energy source parameter) with the total amount of energy used by that user (defined by the energy usage parameter), the amount of energy requiring generation at each energy generator 102a-d can be calculated. For example, a particular user may define an energy source parameter defining that 10% of their energy is to be generated from fossil fuel sources, 40% is to be generated from nuclear sources and 50% is to be generated from wind power sources. The energy usage parameter associated with that particular user may indicate that the user typically uses 50 kWh of energy in a certain period of time (a day, week, month or year for example). Using this information, the server is arranged to calculate energy generation data which indicates that of the 50 kWh of energy which must be generated for that user, 5 kWh should be generated at an energy generator using fossil fuels (e.g. the second energy generator 103b), 20 kWh should be generated at a generator using nuclear sources (e.g. the third energy generator 103c) and 25 kWh should be generated at an energy generator using wind power sources (e.g. the first energy generator 103a).

The energy generation data may be accumulated to give a total amount of energy that is required from each of the energy generators 102a, 102b, 102c, 102d. The energy generation data may therefore indicate the amount of energy to be generated or supplied to the utility grid by each of energy generators. The energy generation data can then be used to control or influence the amount of energy generated and supplied to the utility grid by each of the generators. The energy generation (or supply of energy to the utility grid) may be directly controlled by transmitting the energy generation data to each of the energy generators and generating or supplying energy accordingly. In other embodiments, the control may be more indirect - the created generation data may be used to influence the amount of energy generated or supplied to the utility grid by at each of the energy generators by providing an indication of user preference and demand. The invention may therefore allow information provided by the user(s) to directly or indirectly control or influence the amount of energy that is generated by each of the energy generators 102a, 102b, 102c, 102d.

In some embodiments, the server 108 is further arranged to transmit the energy generation data to each of the energy generators 102a, 102b, 102c, 102d to control the generation of energy. Energy data associated with each user 106a-n can be accumulated to give a total amount of energy that is required from each generation source over a certain period of time in order to supply all of the users. These data are transmitted to each of the energy generators 102a, 102b and 102c, 102d to control how much energy they produce and therefore how much energy they supply to the utility grid. Where there is more than one energy generator associated with a certain energy source (e.g. there are two energy generators which generate energy using fossil fuels) the amount of energy requiring generation from that source can be split between the generators.

The user interface 110 comprises selectors 112a, 112b, 112c, 112d each corresponding to a different energy source or energy generator. In the embodiment shown in Figure 1, there are four selectors, each corresponding to a different energy source used by the energy generators 102a, 102b, 102c, 102d. In other embodiments there may be any number of selectors corresponding to different energy sources such as wind power, solar power, gas, coal, oil nuclear, hydro-electric, or the like. In some embodiments, additionally, or alternatively, one or more of the indicators may correspond to a specific energy generator so that the user may choose to have their energy supplied from that particular energy generator. Such an energy generator may for example, be a community energy generation site for which the user has a particular preference. Each of the selectors 112a, 112b, 112c, 112d are arranged to allow the selection of the proportion of energy required from the corresponding energy source or energy generator. The user may therefore manipulate the selectors to define an energy source parameter indicating the proportion of their total energy supply they wish to come from each energy source or a particular energy generator. This provides an efficient and convenient way of allowing the user to have control over where and/or how their energy is produced.

The selectors 112a, 112b, 112c, 112d are linked so that each of the proportions of energy sum to a total of 100%. The selectors are linked such that manipulation of one of the selectors results in a change in one or more the other selectors. In one embodiment, this consequential change does not result in a movement of the position of the slider and simply results in a change of percentage reflected by the position of the slider. If the user were to manipulate one of the selectors to increase the proportion of their energy provided from that corresponding source or generator, the other indicators may be changed so that the total of the proportion of each source or generator is not greater than 100%.

In some embodiments, a second selector is provided for each energy source or generator. The second selector is arranged to allow that energy source or generator to be chosen to provide all of the energy required by that user. If the second selector is activated by the user, the proportion of energy from that generator or energy source is set to 100%, and the proportion of energy from the other generators or energy sources are set to 0%. This allows the user to quickly and conveniently select a single source for all of their energy.

In the embodiment being described, the indicators 112a, 112b, 112c, 112d comprise a slider. However, in other embodiments the indicators may comprise any one or more of, buttons, dials, text input fields, drop down boxes, text boxes, or the like. Each of the sliders may be moved by an input from the user, such as via an input to the GUI (Graphical User Interface) on the computing device that he/she is using, to change the proportion of energy provided from the source of energy or energy generator associated with that particular slider. The position of the slider conveniently indicates to the user the proportion that has been selected.

The user interface 110 is further arranged to provide information associated with one or more of the energy generation sources or energy generators. The information may be an indicator associated with each slider 112a, 112b, 112c, 112d giving an indication to the user of the source of energy to which the slider corresponds. Where the slider is associated with a particular energy generator, the information may provide detail of the location of the energy source. In some embodiments, the information may be in the form of a map showing the location of the energy generator along with the position of the user. The information may further comprise a clickable link, such as a hyperlink, which directs the user to a webpage or social media page associated with a particular energy generator. This is particularly advantageous for community energy generation projects where the user may require more information on how the project is run or funded and the efficiency or performance of the project.

In the embodiment shown in Figure 1, the system 100 further comprises a memory 114 in communication with the server 108. In this embodiment the memory is remote from the server, but in other embodiments the memory could be part of the server. The memory 114 is arranged to store the energy usage parameter associated with each of the users 106a, 106b...106n. The skilled person will appreciate that the memory may be a Random Access Memory (RAM) or may be other memory, such as a hard drive, hard drive array, or the like. The memory may be connected to the server over a network connection thereto.

The usage parameters may be stored in a user profile 116a, 116b,..166n associated with each user. In this embodiment, the energy usage parameter is an average amount of the energy used by the user in a predefined period of time. The energy usage parameter may therefore define the average amount of energy used by a user in a period of a week, month or year for example. The average amount of energy used in a set period of time may be determined from previous usage data.

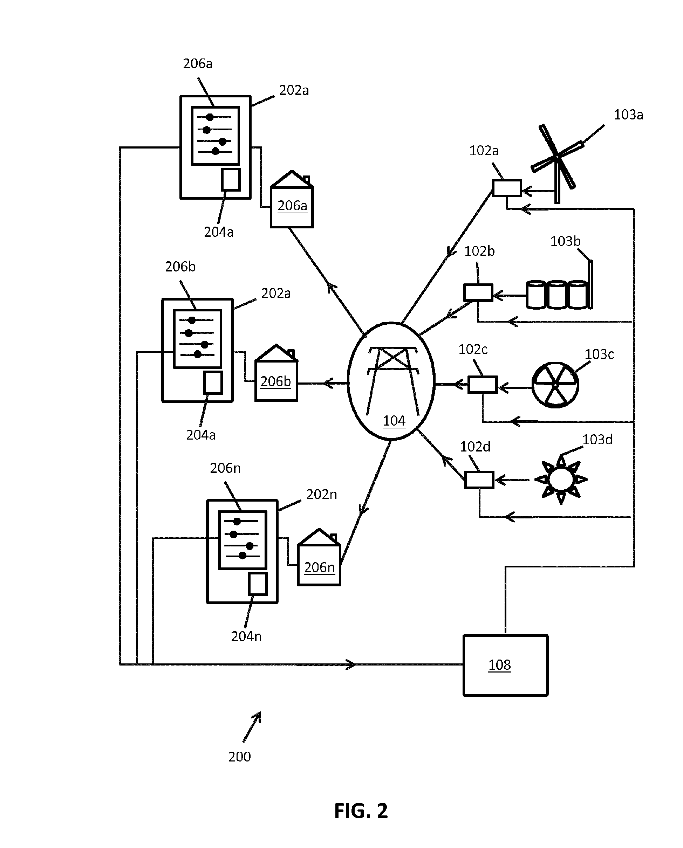

An alternative embodiment of the system 100 is shown in Figure 2. Common features of the system are given labels corresponding to those of Figure 1. In the embodiment shown in Figure 2, the system 200 further comprises a control unit 202a, 202b,..., 202n associated with each user. Here, the control units may be referred to as a smart meter.

Each of the control units 202a, 202b,..., 202n may be located at a remote location from the server 108, and in particular may be located at a property or building associated with each of the users 106a, 106b, ...,106n. Each of the control units 202a, 202b,.., 202n are in communication with the server 108. This communication may be via a dedicated connection between each of the control units 202a, 202b...202n and the server, or may be over a public network 111 such as the Internet. For reasons of clarity, the network is shown as a single line from the users 206 to the server 108. However, the skilled person will appreciate that the network architecture may be more as shown in Figure 1, or indeed any other suitable form of architecture to connect the users 206 to the server 108.

Each of the control units 202a, 202b, 202n is arranged to measure the energy usage parameter corresponding to the energy used by a particular user. In the embodiment shown in Figure 2, each of the control units 202a, 202b..202n comprises a sensor 204a, 204b,...204n arranged to measure the amount of energy being used by a user in any given time. In this embodiment, the energy usage parameter provides an instantaneous measurement of the amount of energy being used by the user. The usage parameter in this embodiment therefore defines the rate at which energy is used by the user. This provides a more accurate measure of the amount of energy being used by the user in comparison to the embodiment of Figure 1 where an average usage measurement is used which is not linked to a real time measurement. By using a real time measurement of the energy being used by each user, the generation of energy can be more accurately controlled in order to meet demand from the users. Here real time is intended or is likely to mean a measurement that is made on the order of seconds or tens of seconds. In some embodiments it is conceivable that measurements on the order of minutes or at least tens of minutes would be suitable.

Each of the control units 202a, 202b...202n may further comprise an interactive display 206a, 206b,..206n arranged to display the user interface and receive an input from the user. The interactive display may be in the form of a touch screen, or any other suitable interactive display such as combined screen and keyboard or the like.

The interactive display may be further arranged to display the energy user parameter to the user. This provides the user with an up-to-date indication of the amount of energy they are currently using.

In alternative embodiments, the user interface 110 may be provided in a similar manner to that described in relation to Figure 1, such as via a web-site. In such an embodiment, the control unit 204 reports energy usage parameter to the server 108 and a user uses the web-site, or the like, to enter his or her energy source parameter.

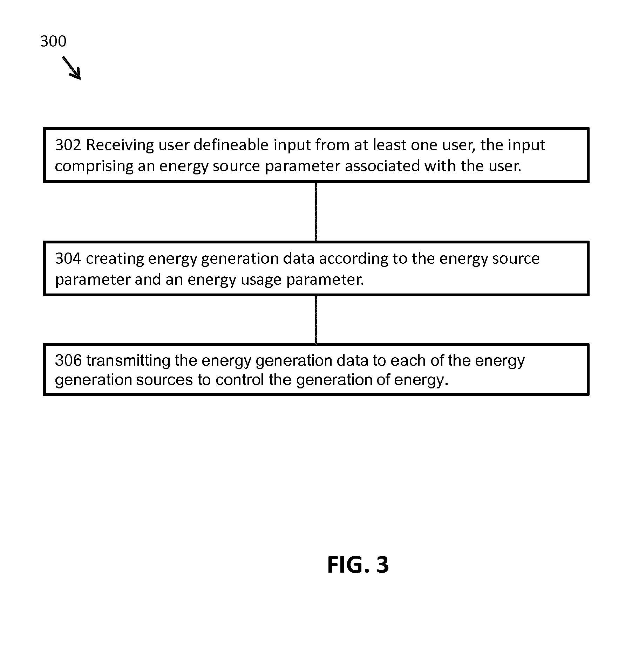

A method 300 of controlling the supply of energy using system 100 is shown in Figure 3. The method begins with receiving 302 user definable input from one of the users 106a, 106b...106n at the server 108. As described above, the input comprises an energy source parameter associated with the user 106. The method 300 may further comprise presenting a user interface, the user interface being arranged to allow the input of the energy source parameter. The user interface may be presented over a public network such as the Internet so that the user has remote access to it. The user may access the user interface over the Internet using a computing device such as a tablet computer, smartphone, personal computer (PC) laptop or other Internet enabled device as would be apparent to the skilled person. After the energy source parameters have been received, the method 300 may further comprise storing the energy source parameters in a memory 114 in communication with the server 108. In this embodiment, the energy usage parameter is an average amount of energy used by the user in a predefined period of time as described above.

Once the energy source parameter has been received at the server 108, energy generation data are created 304 according to the energy source parameter and an energy usage parameter as described above.

Once the energy data have been created in step 304 the method 300 proceeds with transmitting 306 the energy generation data to each of the energy generation sources to control the generation of energy.

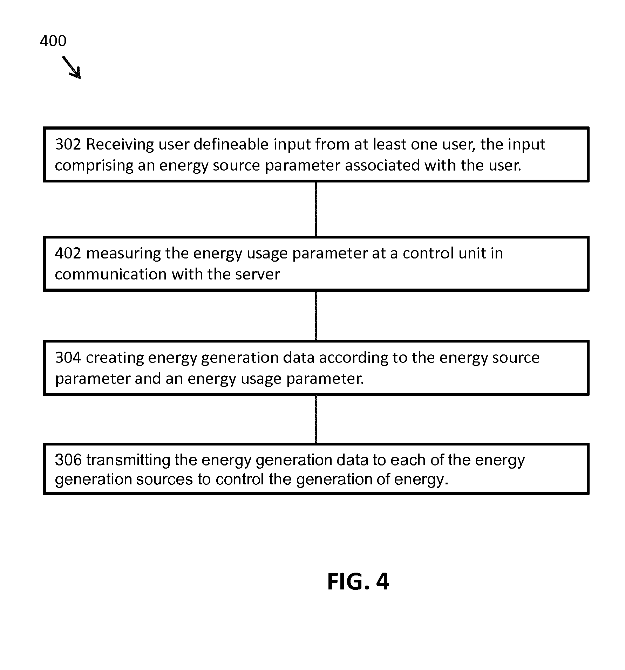

A method 400 of controlling the supply of energy using system 200 is shown in Figure 4. Common steps shared with the method 300 shown in Figure 3 are labelled accordingly. The method 400 further comprises measuring 402 the energy usage parameter at a control unit in communication with the server 108. The energy usage parameter is measured using a sensor 204a, 204b...204n in order to give an instantaneous (i.e. real time) indication of the amount of energy being used by the user.

In this embodiment the energy usage parameters provide a measure of the rate at which energy is being used by a particular user. The instantaneous energy usage parameter is communicated to the server 108 so that it can be combined with the energy source parameter to calculate the energy generation data. By basing the energy generation data on real-time energy usage data the generation of energy can be more accurately controlled and can be more flexible to changes in demand from users.

The methods 300 and 400 may further comprise generating energy at at least one of the energy generators according to the received energy generation data. The energy generation data define how much energy is required from each energy generator and therefore can be used to control the supply of energy generated at each of the generators 102a, 102b, 102c, 102d. By controlling the energy generated in accordance with the energy generation data the amount of energy generated at each generator is effectively controlled by the each user.

## Claims

1. A system arranged to control the supply of energy to a utility grid from at least two energy generators, each generating energy from an energy source, the system comprising:
a server arranged to:
receive user definable input from at least one user, the input comprising an energy source parameter associated with the user, the energy source parameter defining a proportion of the total energy to be supplied to that user which is required from each of the energy generators or each of the energy sources;
create energy generation data according to the energy source parameter and an energy usage parameter, the energy usage parameter relating to the amount of energy used by the user; and
transmit the energy generation data to each of the energy generators to control the generation of energy.

2. A system according to claim 1, wherein the user definable input is received via a user interface presented to the user and arranged to allow the input of the energy source parameter, and wherein optionally:
the user interface comprises at least two selectors, each corresponding to one of the energy sources or energy generators, each selector being arranged to allow the selection of the proportion of energy required from the corresponding energy source or energy generator and optionally wherein the selectors are:
linked so that each of the proportions of energy sum to a total of 100%; and/or
comprise any one or more of sliders, drop down boxes, text boxes, dials.

3. A system according to claim 2, wherein the user interface is further arranged to provide information associated with one or more of the energy sources or energy generators.

4. A system according to any proceeding claim, the system further comprising a memory arranged to store the energy usage parameter associated with the at least one user, wherein the energy usage parameter is an average amount of energy used by the user in a predefined period of time.

5. A system according to any one or more of claims 1 to 4, the system further comprising at least one control unit in communication with the server, the at least one control unit being arranged to measure the energy usage parameter, wherein optionally:
the energy usage parameter is a measurement of the amount of energy being used by the user.

6. A system according to claim 5, wherein the at least one control unit further comprises an interactive display arranged to display the user interface and receive an input from the user, and optionally:
wherein the interactive display is further arranged to display the energy user parameter to the user.

7. A method of controlling the supply of energy to a utility grid from at least two energy generators, each generating energy from an energy source, the method comprising, at a server:
receiving user definable input from at least one user, the input comprising an energy source parameter associated with the user, the energy source parameter defining a proportion of the total energy to be supplied to that user which is required from each of the energy sources or each of the energy generators;
creating energy generation data according to the energy source parameter and an energy usage parameter, the energy usage parameter relating to the amount of energy used by the user; and
transmitting the energy generation data to each of the energy generators to control the generation of energy.

8. A method according to claim 7, further comprising presenting a user interface to the user, the user interface arranged to allow the input of the energy source parameter and wherein optionally:
the user interface comprises at least two selectors, each corresponding to one of the energy sources or one of the energy generators, each selector being arranged to allow the selection of the proportion of energy required from the corresponding energy source, and wherein optionally the selectors are:
linked so that each of the proportions of energy sum to a total of 100%; and/or
comprise any one or more of sliders, sliders, drop down boxes, text boxes, dials.

9. A method according to claim 8, further comprising providing information associated with each of the energy sources or energy generators at the user interface.

10. A method according to any one or more of claims 7 to 9, wherein the method further comprises storing the energy usage parameter associated with the at least one user in a memory in communication with the server, wherein the energy usage parameter is an average amount of energy used by the user in a predefined period of time.

11. A method according to any one of claims 7 to 9, further comprising measuring the energy usage parameter at a control unit in communication with the server and wherein optionally:
the energy usage parameter is a measure of the amount of energy being used by the user.

12. A method according to claim 11, further comprising displaying the user interface, and receiving a user input, at the control unit, and optionally the method
further comprising displaying the energy use parameter to the user at the control unit.

13. A machine readable medium containing instructions which when read by a computer cause that computer to perform the method of any of claims 7 to 12

14. A method of controlling the supply of energy from at least two energy generators, each generating energy from an energy source, the method comprising, at a server:
receiving user definable input from at least one user, the input comprising an energy source parameter associated with the user, the energy source parameter defining a proportion of the total energy to be supplied to that user which is required from each of the energy sources or each of the energy generators;
creating energy generation data according to the energy source parameter and an energy usage parameter, the energy usage parameter relating to the amount of energy used by the user; and
transmitting the energy generation data to each of the energy generators to control the generation of energy;
and
at least one of the energy generators:
generating energy according to the received energy generation data.
